# EUROPÄISCHE PATENTSCHRIFT

(11) **EP 1 975 569 B1**
(45) Veröffentlichungstag und Bekanntmachung des Hinweises auf die Patenterteilung: **18.02.2015**
(21) Anmeldenummer: 07118571.4
(22) Anmeldetag: 16.10.2007
(51) Int. Cl.: G01D 5/14

(54) **Messeinrichtung zur berührungslosen Erfassung eines Drehwinkels mit in einer Ausnehmung des Magneten angeordnetem magnetempfindlichen Element**
Measuring device for contactless recording of the rotation angle with a magnet sensitive element fitted into a recess of the magnet
Dispositif de mesure destiné à la détermination sans contact d'un angle de rotation à l'aide d'un élément sensible à l'aimantation agencé dans un creux de l'aimant

(30) Priorität: 29.03.2007 DE 102007016133
(43) Veröffentlichungstag der Anmeldung: 01.10.2008
(73) Patentinhaber: ROBERT BOSCH GMBH, 70442 Stuttgart (DE)
(72) Erfinder: Bauer, Bernhard, 71566, Althuette (DE); Zeh, Matthias, 71732, Tamm (DE); Koeberle, Bernd, 70736, Fellbach (DE); Klotzbuecher, Thomas, 73635, Rudersberg (DE)

(56) Entgegenhaltungen:
- DE-A1-102005 040 647
- US-A1- 2002 011 837
- US-A1- 2006 244 441

## Beschreibung

### Stand der Technik

Die Erfindung betrifft eine Messeinrichtung zur berührungslosen Erfassung eines Drehwinkels mit einem ersten Körper, auf dem wenigstens ein Magnet angeordnet ist und mit wenigstens einem von einem zweiten Körper getragenen magnetfeldempfindlichen Element zur Erzeugung eines Messsignals, wobei der erste Körper und der zweite Körper um eine Drehachse gegeneinander verdrehbar sind und der Magnet eine sacklochartige Ausnehmung aufweist, gemäß dem Oberbegriff von Anspruch 1.

Eine solche Messeinrichtung ist in verschiedenen Systemen des Fahrzeugbereichs verwendbar, in denen Drehwinkel gemessen werden müssen, wie beispielsweise in einem Drosselklappengeber, in einem Gaspedalwertgeber in einem Pedalmodul, in einem Karosserieeinfederungsgeber oder in einem Winkelaufnehmer eines Scheibenwischerantriebs.

Als magnetfeldempfindliches Element kommen bei solchen Messeinrichtungen vor allem Hall-Elemente zum Einsatz. Der Halleffekt gehört zu den galvanomagnetischen Effekten und wird vor allem mittels dünner Halbleiterplättchen ausgewertet. Wird ein solches stromdurchflossenes Halbleiterplättchen senkrecht von einem Magnetfeld durchsetzt, kann quer zur Stromrichtung eine zum Magnetfeld proportionale Spannung abgegriffen werden. Im Falle von Silizium als Grundmaterial kann man gleichzeitig eine Signalverarbeitungselektronik auf dem Halbleiterplättchen integrieren, wodurch solche Sensoren sehr kostengünstig werden. Solche integrierten Hall-IC's eignen sich vorwiegend für die Messung von Winkeln und Wegen, indem sie die schwankende Feldstärke des mit einem bewegten Rotor verbundenen Magneten erfassen.

Ein Sensor mit solchen Hall-Elementen ist beispielsweise aus der EP 1 182 461 A2 bekannt, wobei ein Magnetfeldkonzentrator in seinem Umfeld den Verlauf der Feldlinien des vom Magneten erzeugten Magnetfelds verändert und bewirkt, dass die Feldlinien, welche bei Abwesenheit des Magnetfeldkonzentrators parallel zur Oberfläche der Hall-Elemente verlaufen würden, die Hall-Elemente annähernd senkrecht zu ihrer Oberfläche durchdringen. Dabei bilden einander diametral gegenüberliegende Hall-Elemente je ein Paar zur Erzeugung eines Ausgangssignals, dessen Stärke von der Richtung des Magnetfelds abhängt, welches wiederum durch die momentane Lage des Magneten definiert wird, der beispielsweise mit einem Läufer eines Elektromotors drehfest verbunden ist, so dass aufgrund des Ausgangssignals der Drehwinkel des Läufers bestimmt werden kann.

Solche Hall-Elemente benötigen eine ausreichende Magnetfeldstärke, damit ihre Auflösung ausreichend groß ist. Ebenso wirkt sich eine große Magnetfeldstärke günstig gegenüber Fremdfeldern und gegenüber der unvermeidbaren Alterung aus. Darüber hinaus benötigen diese Sensoren einen homogenen, magnetischen Winkelbereich, damit Neuteiltoleranzen bzw. Toleranzen, welche im Betrieb entstehen, wie beispielsweise Drehachsverlagerungen aufgrund von Verschleiß oder mechanischem Spiel ausgeglichen werden können. Deshalb bauen die in solchen Anwendungen verwendeten Magneten relativ groß.

Manche Anwendungen, beispielsweise als Drehwinkelgeber in Fahrpedalmoduln, haben einen Verstellbereich von 10 bis 30 Grad Winkeldrehung. Bei solchen Anwendungen verursachen bereits kleine Fehler im Bereich von 0,1 Grad bis 0,3 Grad in der Elektronik relativ große Spannungsänderungen im Ausgangssignal.

Eine gattungsgemäße Messeinrichtung ist aus der DE 10 2005 013 442 A1 bekannt und wird in einem Fahrpedalmodul verwendet. Sie beinhaltet zwei zu einer Mittelachse symmetrisch angeordnete Magnetscheiben mit je einer sacklochartigen Ausnehmung, welchen das magnetfeldempfindliche Element mit jeweils relativ großem axialen Luftspalt zwischengeordnet ist. Die magnetische Feldstärke nimmt jedoch mit der Entfernung des magnetfeldempfindlichen Elements vom Magneten ab. Deshalb sind relativ große Magneten notwendig, um eine für ein lineares Ausgangsssignal des magnetfeldempfindlichen Elements ausreichende Magnetfeldstärke und Homogenität bereitzustellen.

Weitere gattungsgemäße Messeinrichtungen sind aus US 2006/244441 A1, US 2002/011837 A1 und DE 10 2005 040647 bekannt.

### Offenbarung der Erfindung

Die Erfindung basiert auf dem Gedanken, dass das magnetempfindliche Element wenigstens teilweise in die sacklochartige Ausnehmung des Magneten hineinragt. Dadurch befindet sich das magnetfeldempfindliche Element in einer in den Magneten eingebetteten Lage und wird somit von einem Bereich des Magnetfelds erfasst, wo dieses homogen ist und die Magnetfeldlinien konzentriert vorkommen. Infolgedessen kann mit einem relativ kleinen Magneten ein relativ starkes homogenes magnetisches Feld erzeugt werden, was sich günstig auf die Auflösung und die Linearität des Messsignals auswirkt. Mithin wird dadurch auch der Einfluss von Fremdfeldern und von Toleranzen reduziert.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform ist der Magnet am Rotor über einen Magnetträger gehalten, welcher am Stator durch eine Führung drehgelagert ist. Dadurch ist der Magnet gegenüber dem magnetfeldempfindlichen Element zentriert und umgekehrt, so dass dadurch gegebenenfalls vorhandenes Spiel der Drehlagerung des Rotors kompensiert werden kann. Diese verbesserte Führung sorgt für eine vorteilhafte Erhöhung der Messgenauigkeit.

Beispielsweise kann die Führung wenigstens zwei vom Magnetträger in Richtung des magnetfeldempfindlichen Elements weg ragende Führungssäulen beinhalten, denen das magnetfeldempfindliche Element zwischengeordnet ist, wobei die Führungssäulen in kreisbogenförmigen Schlitzen des Stators geführt sind.

Gemäß einer weiteren Maßnahme weist das magnetfeldempfindliche Element von einem Boden der Ausnehmung des Magneten einen Abstand auf, welcher so klein ist, dass das magnetfeldempfindliche Element diesen Boden gerade nicht kontaktiert. Diese Maßnahme sorgt für eine weitere Verbesserung der Lage des magnetfeldempfindlichen Elements in Bezug zu dem Magneten, da ein möglichst geringer Abstand, ohne jedoch einen magnetischen Kurzschluss zu erzeugen, für eine noch bessere Durchflutung des magnetfeldempfindlichen Elements durch das Magnetfeld sorgt.

Nicht zuletzt ist der Magnet scheibenförmig und auf der zum magnetfeldempfindlichen Element weisenden Fläche sektorförmig magnetisiert oder polarisiert. Dann sind die Ränder der Ausnehmung des Magneten gegenläufig polarisiert, wodurch die Feldlinien des Magnetfelds im Bereich der Ausnehmung konzentriert auftreten und etwa parallel zum Boden der Ausnehmung und damit auch parallel zu dem magnetfeldempfindlichen Element verlaufen. Wenn dieses durch ein Hall-Element gebildet wird, weist es einen Magnetfeldkonzentrator auf. Denn Hall-Elemente sind empfindlich auf die Komponente des Magnetfelds B, die senkrecht auf ihre Oberfläche auftrifft, wie eingangs bereits diskutiert wurde. Der Magnetfeldkonzentrator verändert in seinem Umfeld den Verlauf der Feldlinien des Magnetfelds B und bewirkt, dass die Feldlinien, welche bei Abwesenheit des Magnetfeldkonzentrators parallel zur Oberfläche des Hall-Elements verlaufen würden, das Hall-Elemente annähernd senkrecht zu seiner Oberfläche durchdringen, also in einer Richtung, in welcher dieses empfindlich ist. Auf diese Weise wird das magnetfeldempfindliche Element optimal von den Feldlinien des Magnetfelds erfasst, was zu einer weiteren Verbesserung der Auflösung und Steigerung der Messgenauigkeit führt.

Der genaue Aufbau der Messeinrichtung wird anhand der folgenden Beschreibung eines Ausführungsbeispiels klar.

### Zeichnung

Ein Ausführungsbeispiel der Erfindung ist in der Zeichnung dargestellt und in der nachfolgenden Beschreibung näher erläutert. In der Zeichnung zeigt
- Fig.1: eine schematische Querschnittsdarstellung einer Messeinrichtung gemäß einer bevorzugten Ausführungsform der Erfindung;
- Fig.2: eine Querschnittsdarstellung entlang der Linie II-II von Fig.1;
- Fig.3: eine Querschnittsdarstellung entlang der Linie III-III von Fig.1;
- Fig.4: eine perspektivische Ansicht eines Magneten, wie er in der Messeinrichtung von Fig. 1 verwendet wird.

### Beschreibung des Ausführungsbeispiels

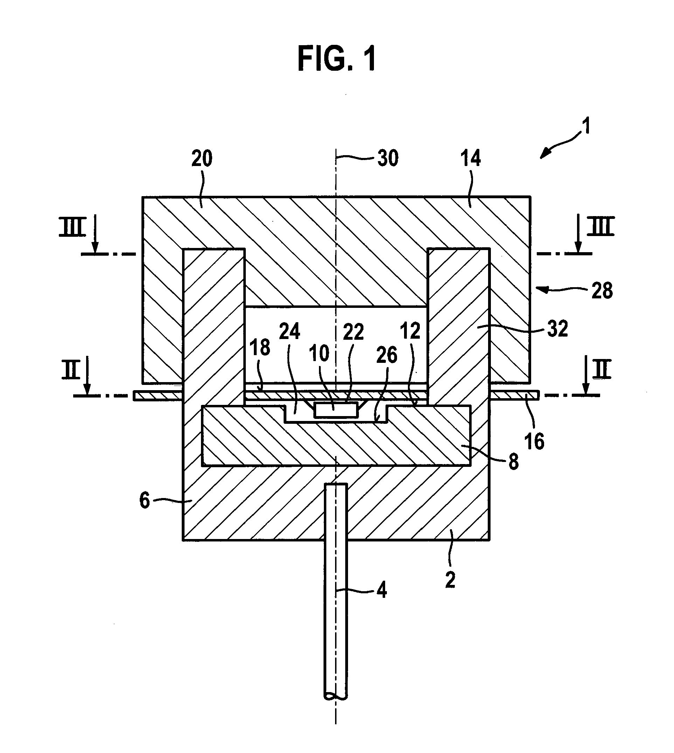

Das in Fig. 1 dargestellte bevorzugte Ausführungsbeispiel einer Messeinrichtung 1 zur berührungslosen Erfassung eines Drehwinkels wird beispielsweise zur Messung des Betätigungswinkels eines aus Maßstabsgründen nicht gezeigten elektronischen Fahrpedals eines Fahrpedalmoduls verwendet. Darüber hinaus ist eine solche Messeinrichtung 1 in verschiedenen Systemen verwendbar, in denen Drehwinkel gemessen werden müssen, im Fahrzeugbereich beispielsweise in einem Drosselklappengeber, in einem Gaspedalwertgeber in einem Pedalmodul, in einem Karosserieeinfederungsgeber oder in einem Winkelaufnehmer eines Scheibenwischerantriebs.

Die Messeinrichtung 1 umfasst einen Rotor 2, beispielsweise einen um eine Drehachse 4 drehbaren scheibenförmigen Magnetträger 6, der mit einem gegenüber einem Lagerbock drehbar gelagerten Fahrpedal drehfest verbunden ist, und in den ein radial äußerer Rand eines beispielsweise scheibenförmigen Magneten 8 eingebettet ist, beispielsweise dadurch, dass der Magnet 8 in den aus einem Kunststoffformling bestehenden scheibenförmigen Magnetträger 6 teilweise eingespritzt wird. Dabei wird eine zu wenigstens einem magnetfeldempfindlichen Element 10 weisende Oberfläche 12 eines radial inneren Teils des Magenten 8 freigelassen. Bei dem Magneten 8 handelt es sich vorzugsweise um einen Permanentmagneten.

Weiterhin ist ein Stator 14 vorhanden, der mit dem Lagerbock des Fahrpedals verbunden ist, welcher das magnetfeldempfindliche Element 10 zur Erzeugung eines Messsignals trägt, wie beispielsweise eine Feldplatte, einen Magnettransistor, eine Spule, ein magnetoresistives Element oder ein Hall-Element. Das magnetfeldempfindliche Element 10 wird von einer Platine 16 an der zum Magneten 8 weisenden Seite getragen, welche an einem Boden 18 eines Gehäuses 20 des Stators 14 befestigt ist.

Im vorliegenden Fall werden bevorzugt ein oder mehrere verschaltete Hall-Elemente als magnetfeldempfindliche Elemente 10 verwendet, die vorzugsweise in einem Halbleiterchip 22 aus Silizium integriert sind, der auf der Platine 16 befestigt und in welchem eine Signalverarbeitungselektronik realisiert ist. Der Halbleiterchip 22 beinhaltet wenigstens einen Magnetfeldkonzentrator. Die Hall-Elemente 10 sind empfindlich auf die Komponente des Magnetfelds B, die senkrecht auf ihre Oberfläche auftrifft, wie eingangs bereits diskutiert wurde. Der Magnetfeldkonzentrator verändert in seinem Umfeld den Verlauf der Feldlinien des vom Permanentmagneten 8 erzeugten Magnetfelds B und bewirkt, dass die Feldlinien, welche bei Abwesenheit des Magnetfeldkonzentrators parallel zur Oberfläche der Hall-Elemente 10 verlaufen würden, die Hall-Elemente 10 annähernd senkrecht zu ihrer Oberfläche durchdringen, also in einer Richtung, in welcher diese empfindlich sind.

Der Magnet 8 ist beispielsweise scheibenförmig ausgebildet und weist eine sacklochartige, beispielsweise kreisrunde Ausnehmung 24 mit einem Boden 26 auf. Alternativ könnte die Ausnehmung 24 einen beliebigen Querschnit aufweisen und insbesondere auch rechteckig ausgebildet sein. Dabei ragt der Halbleiterchip 22 mit den magnetempfindlichen Elementen 10 wenigstens teilweise in die sacklochartige Ausnehmung 24 des Magneten 8 hinein. Im vorliegenden Fall befindet sich der Halbleiterchip 22 fast vollständig in dieser Ausnehmung 24, wobei nur ein geringer Teil über die Oberfläche 12 des Magneten 8 hinausragt. Dadurch befinden sich die magnetfeldempfindlichen Elemente 10 in einer in den Magneten 8 eingebetteten Lage und werden somit von einem Bereich des Magnetfelds B erfasst, wo dieses homogen ist und die Magnetfeldlinien konzentriert vorkommen.

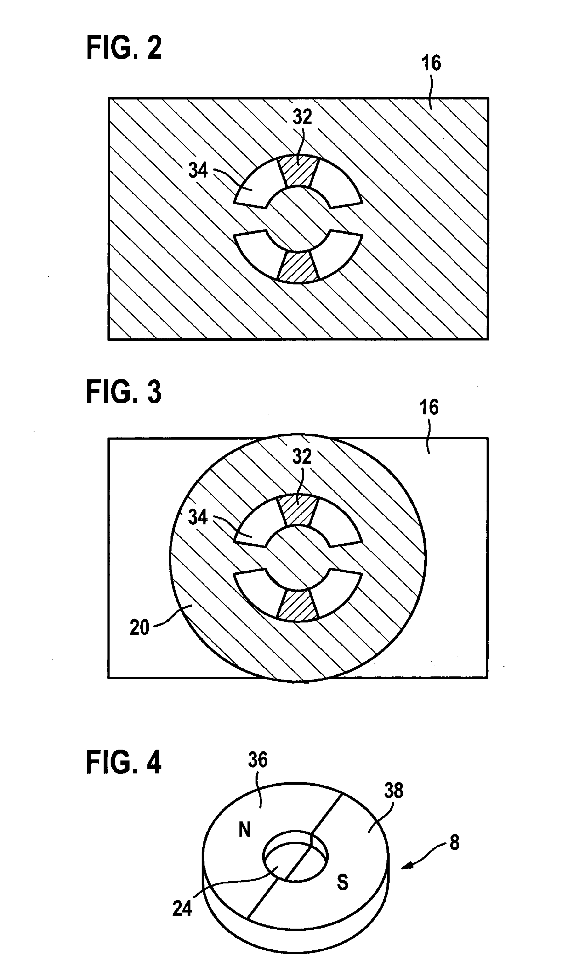

Gemäß der bevorzugten Ausführungsform wird der den Magneten 8 tragende, scheibenförmige Magnetträger 6 außer durch die Drehachse 4 auch gegenüberliegend an dem Gehäuse 20 des Stators 14 durch eine Führung 28 drehgelagert. Der scheibenförmige Magnetträger 6 und das beispielsweise zylindrische Gehäuse 20 sind koaxial zueinander und zu einer Mittelachse 30 angeordnet. Beispielsweise kann die Führung 28 wenigstens zwei vom radial äußeren Rand des Magnetträgers 6 in Richtung der magnetfeldempfindlichen Elemente 10 bzw. in Richtung des Gehäuses 20 weg ragende Führungssäulen 32 beinhalten, denen die magnetfeldempfindlichen Elemente 10 zwischengeordnet sind, wobei die Führungssäulen 32 in im Gehäuse 20 ausgebildeten kreisbogenförmigen Führungsschlitzen 34 geführt sind, wie Fig.2 und Fig.3 zeigen.

Weiterhin weist der Halbleiterchip 22 mit den magnetfeldempfindlichen Elementen 10 vom Boden 26 der Ausnehmung 24 des Magneten 8 einen Abstand auf, welcher so klein ist, dass die magnetfeldempfindlichen Elemente 10 diesen Boden 26 gerade nicht kontaktieren. Diese Maßnahme sorgt für eine Verbesserung der Lage der magnetfeldempfindlichen Elemente 10 in Bezug zu dem Magneten 8, da ein möglichst geringer Abstand, ohne jedoch einen magnetischen Kurzschluss zu erzeugen, für eine bessere Durchflutung der magnetfeldempfindlichen Elemente 10 durch das Magnetfeld B sorgt.

Nicht zuletzt ist der Magnet 8 auf der zu den magnetfeldempfindlichen Elementen 10 weisenden Oberfläche 12 sektorförmig magnetisiert oder polarisiert, wie aus Fig.4 hevorgeht. Unter einer solchen sektorförmigen Polarisierung oder Magnetisierung sind jeweils unterschiedliche Polungen von Sektoren 36, 38 des scheibenförmigen Magneten 8 zu verstehen, so dass sich die Polung in Umfangsrichtung gesehen von Sektor 36 zu Sektor 38 ändert.

Im vorliegenden Fall sind lediglich zwei Sektoren 36, 38 mit unterschiedlicher Polung Nordpol N, Südpol S vorgesehen. Alternativ könnten auch mehr als zwei Sektoren unterschiedlicher Polung vorhanden sein. Beim bevorzugten Ausführungsbeispiel sind dann insbesondere die halbkreisförmig verlaufenden Ränder der Ausnehmung 24 des Magneten 8 gegenläufig polarisiert, wodurch die Feldlinien des Magnetfelds B im Bereich der Ausnehmung 24 konzentriert auftreten und etwa parallel zu ihrem Boden 26 und damit auch parallel zu den magnetfeldempfindlichen Elementen 10 verlaufen. Der den magnetfeldempfindlichen Elementen 10 zugeordnete Magnetfeldkonzentrator sorgt dann für eine Umlenkung der Magnetfeldlinien senkrecht zu seiner Oberfläche, in eine Richtung also, in welcher diese empfindlich auf das Magnetfeld B reagieren, wie eingangs bereits diskutiert wurde.

Alternativ könnte der Magnet 8 auch axial magnetisiert oder polarisiert sein. Dies bedeutet für den vorliegenden Fall eines scheibenförmigen Magneten 8, dass die Trennebene zwischen dem Nordpol N und dem Südpol S etwa koplanar mit der senkrecht zur Mittelachse 30 verlaufenden Mittelebene des Magneten 8 ist.

Dann erfassen die magnetfeldempfindlichen Elemente 10 die von der Drehlage abhängige Feldstärke bzw. Feldrichtung des Magnetfelds B des mit dem Fahrpedal drehfest verbundenen Permanentmagneten 8, so dass aufgrund des Ausgangssignals der magnetfeldempfindlichen Elemente 10 der momentane Drehwinkel des Permanentmagneten 8 mit Hilfe der Signalverarbeitungselektronik bestimmt werden kann. Da der Permanentmagnet 8 drehfest mit dem Fahrpedal verbunden ist, kann aus dem Ausgangssignal der magnetfeldempfindlichen Elemente 10 dessen Drehwinkelstellung errechnet werden. Die Funktionsweise und Verschaltung von Hall-Elementen als magnetfeldempfindliche Elemente mit Magnetfeldkonzentrator ist beispielsweise in der EP 1 182 461 A2 und US 2002/0021124 A1 hinreichend beschrieben, weshalb hier nicht weiter darauf eingegangen werden soll.

Die Messeinrichtung 1 dient zum Erfassen einer Verdrehung zweier Körper relativ zueinander. Die Messeinrichtung 1 kann so ausgeführt sein, dass der erste Körper 2 mit dem Magnet 8 den drehbaren Rotor der Messeinrichtung 1 bildet, und zweite Körper 14 mit dem magnetempfindlichen Element 10 bildet den feststehenden Stator der Messeinrichtung 1. Die Messeinrichtung 1 kann aber auch so ausgeführt sein, dass der erste Körper 2 mit dem Magnet 8 feststehend ist und somit als Stator der Messeinrichtung 1 bezeichnet werden kann, und der zweite Körper 14 mit dem magnetempfindlichen Element 10 ist drehbar und kann als Rotor der Messeinrichtung 1 bezeichnet werden.

## Patentansprüche

1. Messeinrichtung (1) zur berührungslosen Erfassung eines Drehwinkels mit einem ersten Körper (2), auf dem wenigstens ein Magnet (8) angeordnet ist und mit wenigstens einem von einem zweiten Körper (14) getragenen magnetfeldempfindlichen Element (10) zur Erzeugung eines Messsignals, wobei der erste Körper (2) und der zweite Körper (14) um eine Drehachse (4) gegeneinander verdrehbar sind und der Magnet (8) eine sacklochartige Ausnehmung (24) aufweist, wobei das wenigstens eine magnetempfindliche Element (10) wenigstens teilweise in die Ausnehmung (24) hineinragt, **dadurch gekennzeichnet, dass** das wenigstens eine magnetempfindliche Element (10) ein Hall-Element ist und einen Magnetfeldkonzentrator umfasst, wobei das Hall-Element empfindlich ist auf die Komponente des Magnetfelds, die senkrecht auf Ihre Oberfläche trifft, wobei der Magnetfeldkonzentrator den Verlauf der Feldlinien des Magnetfelds verändert und bewirkt, dass die Feldlinien das Hall-Element annähernd senkrecht zu seiner Oberfläche durchdringen.

2. Messeinrichtung nach Anspruch 1, **dadurch gekennzeichnet, dass** der erste Körper (2) ein Rotor und der zweite Körper (14) ein Stator ist.

3. Messeinrichtung nach Anspruch 2, **dadurch gekennzeichnet, dass** der Magnet (8) an dem Rotor (2) über einen Magnetträger (6) gehalten ist, welcher am Stator (14) durch eine Führung (28) drehgelagert ist.

4. Messeinrichtung nach Anspruch 3, **dadurch gekennzeichnet, dass** die Führung (28) wenigstens zwei vom Magnetträger (6) in Richtung des magnetfeldempfindlichen Elements (10) weg ragende Führungssäulen (32) beinhaltet, denen das magnetfeldempfindliche Element (10) zwischengeordnet ist.

5. Messeinrichtung nach Anspruch 4, **dadurch gekennzeichnet, dass** die Führungssäulen (32) in kreisbogenförmigen Führungsschlitzen (34) des Stators (14) geführt sind.

6. Messeinrichtung nach wenigstens einem der vorhergehenden Ansprüche, **dadurch gekennzeichnet, dass** der Magnet (8) scheibenförmig ausgebildet ist.

7. Messeinrichtung nach Anspruch 6, **dadurch gekennzeichnet, dass** der Magnet (8) auf der zum magnetfeldempfindlichen Element (10) weisenden Oberfläche (12) sektorförmig magnetisiert oder polarisiert ist.

8. Messeinrichtung nach wenigstens einem der vorhergehenden Ansprüche, **dadurch gekennzeichnet, dass** das magnetfeldempfindliche Element (10) von einem Boden (26) der Ausnehmung (24) des Magenten (8) einen Abstand aufweist, welcher so klein ist, dass das magnetfeldempfindliche Element (10) diesen Boden (26) gerade nicht kontaktiert.

9. Messeinrichtung nach Anspruch 1, **dadurch gekennzeichnet, dass** der erste Körper (2) ein Stator und der zweite Körper (14) ein Rotor ist.

## Claims

1. Measuring device (1) for the contactless detection of a rotation angle, having a first body (2), on which at least one magnet (8) is arranged, and having at least one magnetic field-sensitive element (10), which is supported by a second body (14), for generating a measurement signal, wherein the first body (2) and the second body (14) can be rotated in relation to one another about a rotation axis (4), and the magnet (8) has a blind hole-like recess (24), wherein the at least one magnetic field-sensitive element (10) projects at least partially into the recess (24), **characterized in that** the at least one magnetic field-sensitive element (10) is a Hall element and comprises a magnetic field concentrator, wherein the Hall element is sensitive to the component of the magnetic field which strikes the surface of the said Hall element in a perpendicular manner, wherein the magnetic field concentrator changes the profile of the field lines of the magnetic field and has the effect that the field lines pass through the Hall element approximately perpendicular to the surface of the said Hall element.

2. Measuring device according to Claim 1, **characterized in that** the first body (2) is a rotor and the second body (14) is a stator.

3. Measuring device according to Claim 2, **characterized in that** the magnet (8) is held on the rotor (2) by means of a magnet support (6) which is rotatably mounted on the stator (14) by a guide (28).

4. Measuring device according to Claim 3, **characterized in that** the guide (28) contains at least two guide pillars (32) which project away from the magnet support (6) in the direction of the magnetic field-sensitive element (10), the magnetic field-sensitive element (10) being interposed between said guide pillars.

5. Measuring device according to Claim 4, **characterized in that** the guide pillars (32) are guided in guide slots (34), which are in the form of an arc of a circle, of the stator (14).

6. Measuring device according to at least one of the preceding claims, **characterized in that** the magnet (8) is of disc-like design.

7. Measuring device according to Claim 6, **characterized in that** the magnet (8) is magnetized or polarized in sectors on that surface (12) which faces the magnetic field-sensitive element (10).

8. Measuring device according to at least one of the preceding claims, **characterized in that** the magnetic field-sensitive element (10) is at a distance from a base (26) of the recess (24) of the magnet (8), said distance being so small that the magnetic field-sensitive element (10) just does not make contact with the said base (26).

9. Measuring device according to Claim 1, **characterized in that** the first body (2) is a stator and the second body (14) is a rotor.

## Revendications

1. Dispositif de mesure (1) destiné à la détection sans contact d'un angle de rotation, comprenant un premier corps (2) sur lequel est disposé au moins un aimant (8) et comprenant au moins un élément sensible au champ magnétique (10) porté par un deuxième corps (14) et destiné à générer un signal de mesure, le premier corps (2) et le deuxième corps (4) pouvant tourner l'un par rapport à l'autre autour d'un axe de rotation (4) et l'aimant (8) présentant une cavité (24) de type trou borgne, l'au moins un élément sensible au champ magnétique (10) pénétrant au moins partiellement dans la cavité (24), **caractérisé en ce que** l'au moins un élément sensible au champ magnétique (10) est un élément à effet Hall et comprend un concentrateur de champ magnétique, l'élément à effet Hall étant sensible à la composante du champ magnétique qui vient heurter sa surface perpendiculairement, le concentrateur de champ magnétique modifiant le tracé des lignes du champ magnétique et ayant pour effet que les lignes de champ traversent l'élément à effet Hall approximativement perpendiculairement à sa surface.

2. Dispositif de mesure selon la revendication 1, **caractérisé en ce que** le premier corps (2) est un rotor et le deuxième corps (14) est un stator.

3. Dispositif de mesure selon la revendication 2, **caractérisé en ce que** l'aimant (8) est maintenu sur le rotor (2) par le biais d'un porte-aimant (6) qui est monté à rotation sur le stator (14) par le biais d'un guide (28).

4. Dispositif de mesure selon la revendication 3, **caractérisé en ce que** le guide (28) comporte au moins deux colonnes de guidage (32) faisant saillie depuis le porte-aimant (6) en direction de l'élément sensible au champ magnétique (10), entre lesquelles est disposé l'élément sensible au champ magnétique (10).

5. Dispositif de mesure selon la revendication 4, **caractérisé en ce que** les colonnes de guidage (32) sont guidées dans des fentes de guidage (34) en forme d'arc de cercle du stator (14).

6. Dispositif de mesure selon au moins l'une des revendications précédentes, **caractérisé en ce que** l'aimant (8) est réalisé en forme de disque.

7. Dispositif de mesure selon la revendication 6, **caractérisé en ce que** l'aimant (8) est magnétisé ou polarisé en forme de secteurs sur la surface (12) dirigée vers l'élément sensible au champ magnétique (10).

8. Dispositif de mesure selon au moins l'une des revendications précédentes, **caractérisé en ce que** l'élément sensible au champ magnétique (10) présente par rapport à un fond (26) de la cavité (24) de l'aimant (8) un écart qui est petit au point que l'élément sensible au champ magnétique (10) n'entre tout juste pas en contact avec ce fond (26).

9. Dispositif de mesure selon la revendication 1, **caractérisé en ce que** le premier corps (2) est un stator et le deuxième corps (14) est un rotor.
